# EUROPÄISCHE PATENTSCHRIFT

(11) **EP 1 235 869 B1**
(45) Veröffentlichungstag und Bekanntmachung des Hinweises auf die Patenterteilung: **01.12.2004**
(21) Anmeldenummer: 00969468.8
(22) Anmeldetag: 10.10.2000
(51) Int. Cl.: C08F 292/00, C08F 2/44

(54) **VERFAHREN ZUR HERSTELLUNG EINER WÄSSRIGEN DISPERSION VON AUS POLYMERISAT UND FEINTEILIGEM ANORGANISCHEN FESTSTOFF AUFGEBAUTEN PARTIKELN**
METHOD FOR PRODUCING AN AQUEOUS DISPERSION OF PARTICLES THAT ARE MADE UP OF POLYMERS AND INORGANIC SOLID MATTER WHICH CONSISTS OF FINE PARTICLES
PROCEDE DE PRODUCTION D'UNE DISPERSION AQUEUSE DE PARTICULES CONSTITUEES D'UN POLYMERISAT ET D'UN SOLIDE EN FINES PARTICULES ANORGANIQUE

(30) Priorität: 20.10.1999 DE 19950464; 07.01.2000 DE 10000281
(43) Veröffentlichungstag der Anmeldung: 04.09.2002
(73) Patentinhaber: BASF AKTIENGESELLSCHAFT, 67056 Ludwigshafen (DE)
(72) Erfinder: XUE, Zhijian, 67059 Ludwigshafen (DE); WIESE, Harm, 69121 Heidelberg (DE)
(86) Internationale Anmeldenummer: PCT/EP2000/009915
(87) Internationale Veröffentlichungsnummer: WO 2001/029106

(56) Entgegenhaltungen:
- EP-A- 0 572 128
- EP-A- 0 606 930
- GB-A- 2 250 020
- US-A- 4 421 660
- US-A- 4 608 401
- US-A- 4 609 608
- US-A- 5 431 956
- US-A- 5 750 618

## Beschreibung

Die vorliegende Erfindung betrifft ein Verfahren zur Herstellung einer wäßrigen Dispersion von aus Polymerisat und feinteiligem anorganischen Feststoff aufgebauten Partikeln (Kompositpartikel), bei dem ein Gemisch aus ethylenisch ungesättigten Monomeren in wäßrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wäßrigen Emulsionspolymerisation polymerisiert wird. Ferner betrifft die vorliegende Erfindung die Verwendung der wäßrigen Kompositpartikeldispersion sowie der Kompositpartikelpulver.

Wäßrige Dispersionen von Kompositpartikeln sind allgemein bekannt. Es handelt sich um fluide Systeme, die als disperse Phase in wäßrigem Dispergiermedium aus mehreren ineinander verschlungenen Polymerisatketten bestehenden Polymerisatknäuel, die sogenannte Polymermatrix, und feinteiligem anorganischen Feststoff aufgebaute Partikel in disperser Verteilung befindlich enthalten. Der Durchmesser der Kompositpartikel liegt häufig im Bereich von 50 nm bis 5000 nm.

Ebenso wie Polymerisatlösungen beim Verdampfen des Lösungsmittels und wäßrige Polymerisatdispersionen beim Verdampfen des wäßrigen Dispergiermediums, weisen wäßrige Dispersionen von Kompositpartikeln das Potential zur Ausbildung von modifizierten, feinteiligen anorganischen Feststoff enthaltenden Polymerisatfilmen auf, weshalb sie insbesondere als modifizierte Bindemittel, z.B. für Anstrichfarben oder für Massen zum Beschichten von Leder, Papier oder Kunststofffolien von Interesse sind. Die aus wäßrigen Dispersionen von Kompositpartikeln prinzipiell zugänglichen Kompositpartikelpulver sind darüber hinaus auch als Additive für Kunststoffe, Komponenten für Tonerformulierungen oder Zusatzstoffe in elektrophotographischen Anwendungen von Interesse.

Bei der Herstellung wäßriger Dispersionen von Kompositpartikeln ist von folgendem Stand der Technik auszugehen.

Ein Verfahren zur Herstellung von mit Polymeren umhüllten anorganischen Partikeln mittels wäßriger Emulsionspolymerisation wird in der US-A 3,544,500 offenbart. Bei diesem Verfahren werden die anorganischen Partikel vor der eigentlichen wäßrigen Emulsionspolymerisation mit wasserunlöslichen Polymeren beschichtet. Die Dispergierung der so in einem aufwendigen Prozeß behandelten anorganischen Partikel in wäßrigem Medium erfolgt mittels spezieller Stabilisatoren.

Die EP-A 104 498 betrifft ein Verfahren zur Herstellung von polymerumhüllten Feststoffen. Kennzeichnend für das Verfahren ist, daß feinteilige Feststoffe, welche eine minimale Oberflächenladung aufweisen, mittels eines nichtionischen Schutzkolloids in wäßrigem Polymersiationsmedium dispergiert und die zugesetzten ethylenisch ungesättigten Monomere mittels nichtionischer Polymerisationsinitiatoren polymerisiert werden.

Die US-A 4,421,660 offenbart ein Verfahren zur Herstellung von wäßrigen Dispersionen, deren dispers vorliegenden Partikel anorganische Teilchen, welche vollständig von einer Polymerschale umgeben sind, aufweisen. Die Herstellung der wäßrigen Dispersionen erfolgt durch radikalisch initiierte wäßrige Emulsionspolymerisation hydrophober ethylenisch ungesättigter Monomerer in Anwesenheit dispers verteilter anorganischer Teilchen.

Ein Verfahren zur Polymerisation von ethylenisch ungesättigten Monomeren in Anwesenheit von ladungsfreien anorganischen Feststoffpartikeln, welche mit nichtionischen Dispergiermitteln im wäßrigen Reaktionsmedium stabilisiert sind, wird in der US-A 4,608,401 offenbart.

Die radikalisch initiierte wäßrige Emulsionspolymerisation von Styrol in Anwesenheit von modifizierten Siliziumdioxidteilchen wird von Furusawa et al. im Journal of Colloid and Interface Science 1986, 109, Seiten 69 bis 76 beschrieben. Die Modifikation der kugelförmigen Siliziumdioxidteilchen mit einem mittleren Teilchendurchmesser von 190 nm erfolgt mittels Hydroxypropylcellulose.

Hergeth et al. (siehe Polymer, 1989, 30, Seiten 254 bis 258) beschreiben die radikalisch initiierte wäßrige Emulsionspolymerisation von Methylmethacrylat bzw. Vinylacetat in Anwesenheit von aggregiertem feinteiligen Quarzpulver. Die Teilchengrößen des eingesetzten aggregierten Quarzpulvers liegen zwischen 1 und 35 µm.

Die GB-A 2 227 739 betrifft ein spezielles Emulsionspolymerisationsverfahren, bei dem ethylenisch ungesättigte Monomere in Anwesenheit dispergierter anorganischer Pulver, welche kationische Ladungen aufweisen, unter Anwendung von Ultraschallwellen polymerisiert werden. Die kationische Ladungen der dispergierten Feststoffteilchen werden durch Behandlung der Teilchen mit kationischen Agenzien erzeugt, wobei Aluminiumsalze bevorzugt sind. Die Schrift enthält jedoch keine Angaben bezüglich Teilchengrößen und Stabilität der wäßrigen Feststoffdispersionen.

In der EP-A 505 230 wird die radikalisch wäßrige Emulsionspolymerisation von ethylenisch ungesättigten Monomeren in Anwesenheit von oberflächenmodifizierten Siliziumdioxidpartikeln offenbart. Deren Funktionalisierung erfolgt mittels spezieller silanolgruppenhaltiger Acrylsäureester.

Die US-A 4,981,882 betrifft die Herstellung von Kompositpartikeln mittels eines speziellen Emulsionspolymerisationsverfahren. Verfahrenswesentlich sind feinteilige anorganische Teilchen, welche mittels basischer Dispergiermittel im wäßrigen Medium dispergiert sind, das Behandeln dieser anorganischen Partikel mit ethylenisch ungesättigten Carbonsäuren und das Zugeben wenigstens einer amphiphilen Komponente zur Stabilisierung der Feststoffdispersion während der Emulsionspolymersiation. Die feinteiligen anorganischen Partikel weisen bevorzugt eine Teilchengröße zwischen 100 und 700 nm auf.

Haga et al. (siehe Die Angewandte Makromolekulare Chemie 1991, 189, Seiten 23 bis 34) beschreiben den Einfluß von Art und Konzentration der Monomeren, Art und Konzentration des Polymerisationsinitiators sowie den Einfluß des pH-Wertes auf die Polymerenbildung an in wäßrigem Medium dispergierten Titandioxidteilchen. Hohe Ausbeuten bei der Verkapselung der Titandioxidteilchen werden erhalten, wenn die Polymerketten und die Titandioxidteilchen entgegengesetzte Ladungen aufweisen. Die Publikation enthält jedoch keine Angaben bezüglich der Teilchengröße und der Stabilität der Titandioxiddispersionen.

Long et al. beschreiben in Tianjin Daxue Xuebao 1991, 4, Seiten 10 bis 15 die dispergiermittelfreie Polymerisation von Methylmethacrylat in Anwesenheit von feinteiligen Siliziumdioxid- bzw. Aluminiumteilchen. Gute Ausbeuten bei der Verkapselung der anorganischen Teilchen werden erhalten, wenn die Endgruppen der Polymerketten und die anorganischen Teilchen entgegengesetzte Ladungen aufweisen.

Die EP-A 572 128 betrifft ein Herstellverfahren von Kompositpartikeln, bei dem die anorganischen Teilchen in wäßrigem Medium bei einem bestimmten pH-Wert mit einer organischen Polysäure oder deren Salz behandelt werden und die daran anschließend durchgeführte radikalisch initiierte wäßrige Emulsionspolymerisation von ethylenisch ungesättigten Monomeren bei einem pH-Wert < 9 erfolgt.

Bourgeat-Lami et al. (siehe Die Angewandte Makromolekulare Chemie 1996, 242, Seiten 105 bis 122) beschreiben die durch radikalisch wäßrige Emulsionspolymerisation von Ethylacrylat in Gegenwart funktionalisierter und nicht funktionalisierter Siliziumdioxidteilchen zugänglichen Reaktionsprodukte. In den Polymerisationsexperimenten wurden generell anionisch geladene Siliziumdioxidteilchen, das nichtionische Nonylphenolethoxylat NP30 und das anionische Natriumdodecylsulfat (SDS) als Emulgatoren und Kaliumperoxodisulfat als radikalischer Polymerisationsinitiator verwendet. Die Autoren beschreiben die angefallenen Reaktionsprodukte als Aggregate, die mehr als ein Siliziumdioxidteilchen enthalten oder als Polymercluster, die sich auf der Siliziumdioxidoberfläche bilden.

Paulke et al. (siehe Synthesis Studies of Paramagnetic Polystyrene Latex Particles in Scientific and Clinical Applications of Magnetic Carriers, Seiten 69 bis 76, Plenum Press, New York, 1997) beschreiben drei prinzipielle Syntheserouten zur Herstellung von wäßrigen eisenoxidhaltigen Polymerdispersionen. Aufgrund unzureichender Stabilität der wäßrigen Feststoffdispersion ist für alle Syntheserouten die Verwendung von frisch gefälltem Eisen-(II/III)-oxid-Hydrat unabdingbare Voraussetzung. In Anwesenheit dieses frisch gefällten Eisen(II/III)-oxid-Hydrats erfolgt in der ersten Syntheseroute die radikalisch initiierte wäßrige Emulsionspolymerisation von Styrol mit SDS als Emulgator und Kaliumperoxodisulfat als Polymerisationsinitiator. In der von den Autoren favorisierten zweiten Syntheseroute wird Styrol und Methacrylsäure in Anwesenheit des frisch gefällten Eisen(II/III)-oxid-Hydrats, des Emulgators N-Cetyl-N,N,N-trimethylammoniumbromid (CTAB) und spezieller oberflächenaktiver Polymerisationsinitiatoren (PEGA 600) in methanolisch/wäßrigem Medium polymerisiert. In der dritten Syntheseroute werden Ethanol und Methoxyethanol als Polymerisationsmedium, Hydroxypropylcellulose als Emulgator, Benzoylperoxid als Polymerisationsinitiator und eine spezielle Eisen-(II/III)-oxid/Styrol-Mischung zur Herstellung von eisenoxidhaltigen Polymerdispersionen verwendet.

In der japanischen Offenlegungsschrift JP 11-209622 wird ein Verfahren zur Herstellung von Kern/Schale-Partikel offenbart, welche einen Kern aus einem Siliziumdioxidteilchen und eine Polymerschale aufweisen. Die Herstellung der Kern/Schale-Partikel erfolgt dergestalt, daß die in wässrigem Medium kolloidal vorliegenden Siliziumdioxidteilchen mit einem kationischen Vinylmonomeren oder einem kationischen Radikalinitiator vorbehandelt werden und daran anschließend eine radikalisch initiierte wässrige Emulsionspolymerisation mit ethylenisch ungesättigten Monomeren erfolgt.

Armes et al. (siehe Advanced Materials 1999, 11, Nr. 5, Seiten 408 bis 410) beschreiben die Herstellung von Siliziumdioxid-Kompositpartikeln, welche in einer emulgatorfreien, radikalisch initiierten wäßrigen Emulsionspolymerisation bei einem pH-Wert von 10 mit speziellen olefinisch ungesättigten Monomeren in Anwesenheit von dispergierten Siliziumdioxidteilchen zugänglich sind. Als Voraussetzung zur Ausbildung von siliziumdioxidenthaltenden Polymerisatpartikeln wird eine starke Säure/Base-Wechselwirkung zwischen dem gebildeten Polymeren und den verwendeten sauren siliziumdioxidteilchen postuliert. Siliziumdioxidenthaltende Polymerisatpartikel wurden mit Poly-4-vinylpyridin und Copolymeren von Styrol bzw. Methylmethacrylat mit 4-Vinylpyridin erhalten. Als geringstmöglicher Gehalt von 4-Vinylpyridin in Methylmethacrylat- bzw. Styrol-Monomerenmischungen, welche zur Ausbildung von siliziumdioxidenthaltenden Kompositpartikeln befähigt sind, wurden 4 bis 10 mol-% genannt.

In der nicht vorveröffentlichten deutschen Patentanmeldung mit dem Aktenzeichen 19942777.1 wird ein Verfahren zur Herstellung von wäßrigen Kompositpartikeldispersionen beschrieben, bei dem die dispergierten anorganischen Feststoffteilchen und die bei der radikalisch initiierten wäßrigen Emulsionspolymerisation eingesetzten radikalerzeugenden und/oder dispergierend wirkenden Komponenten entgegengesetzte Ladungen aufweisen.

Aufgabe der vorliegenden Erfindung war es, angesichts des vorstehenden Standes der Technik ein verbessertes Verfahren zur Herstellung einer wäßrigen Dispersion von Kompositpartikeln nach der Methode der radikalisch initiierten wäßrigen Emulsionspolymerisation zur Verfügung zu stellen, welches die Nachteile der bekannten Verfahren nicht oder nur im verminderten Umfang aufweist und Kompositpartikel mit einem ausgewogenen Profil guter Anwendungseigenschaften liefert.

Demgemäß wird ein Verfahren zur Herstellung einer wäßrigen Dispersion von aus Polymerisat und feinteiligem anorganischen Feststoff aufgebauten Kompositpartikeln zur Verfügung gestellt, bei dem ein Gemisch aus ethylenisch ungesättigten Monomeren in wäßrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wäßrigen Emulsionspolymerisation polymerisiert wird, dadurch gekennzeichnet, daß
a) eine stabile wäßrige Dispersion des wenigstens einen anorganischen Feststoffs eingesetzt wird, welche dadurch charakterisiert ist, daß sie bei einer Anfangsfeststoffkonzentration von ≥ 1 Gew.-%, bezogen auf die wäßrige Dispersion des wenigstens einen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wäßrigen Standardkaliumchlorid-Lösung bei einem pH-Wert, der dem pH-Wert des wäßrigen Reaktionsmediums am Beginn der Emulsionspolymerisation entspricht, eine von Null verschiedene elektrophoretische Mobilität zeigen
   und
c) das Gemisch aus ethylenisch ungesättigten Monomeren > 0 und ≤ 4 Gew.-%, bezogen seine Gesamtmenge, wenigstens ein ethylenisch ungesättigtes Monomer A enthält, das entweder
   - wenigstens eine Säuregruppe und/oder deren entsprechendes Anion enthält, wenn die dispergierten Feststoffteilchen des wenigstens einen anorganischen Feststoffs unter den vorgenannten Bedingungen eine elektrophoretische Mobilität mit positivem Vorzeichen aufweisen,
      oder
   - wenigstens eine Amino-, Amido-, Ureido- oder N-heterocyclische Gruppe und/oder deren am Stickstoff protonierten oder alkylierten Ammoniumderivate enthält, wenn die dispergierten Feststoffteilchen des wenigstens einen anorganischen Feststoffs unter den vorgenannten Bedingungen eine elektrophoretische Mobilität mit negativem Vorzeichen aufweisen.

Für das erfindungsgemäße Verfahren sind alle diejenigen feinteiligen anorganischen Feststoffe geeignet, welche stabile wäßrige Dispersionen ausbilden, die bei einer Anfangsfeststoffkonzentration von ≥ 1 Gew.-%, bezogen auf die wäßrige Dispersion des wenigstens einen Feststoffs, noch eine Stunde nach ihrer Herstellung mehr als 90 Gew.-% des ursprünglich dispergierten Feststoffes in dispergierter Form enthalten und deren dispergierten Feststoffteilchen einen gewichtsmittleren Durchmesser ≤ 100 nm aufweisen und darüber hinaus bei einem pH-Wert, der dem pH-Wert des wäßrigen Reaktionsmediums am Beginn der Emulsionspolymerisation entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der gewichtsmittleren Teilchendurchmesser kann beispielsweise über die Methode der Analytischen Ultrazentrifuge erfolgen (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175).

Als erfindungsgemäß einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [Ca₅{(PO₄)₃OH}], Orthosilikate, wie Lithiumorthosilikat, Calcium-/Magnesiumorthosilikat, Aluminiumorthosilikat, Eisen-(II)-orthosilikat, Eisen-(III)-orthosilikat, Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH (Marke der Südchemie AG), Saponit® SKS-20 und Hektorit® SKS 21 (Marken der Hoechst AG) sowie Laponite® RD und Laponite® GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nisan Chemical Industries, Ltd.) bezogen werden. Erfindungsgemäß geeignete Nichtmetallverbindungen sind beispielsweise kolloidal vorliegender Graphit oder Diamant.

Als wenigstens ein feinteiliger anorganischer Feststoff lassen sich ferner alle vorgenannten Verbindungen einsetzen, deren Oberflächen mit polymeren Verbindungen oder anorganischen Materialien modifiziert wurden.

Als feinteilige anorganische Feststoffe sind solche besonders geeignet, deren Löslichkeit in Wasser bei 20 °C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid. Insbesondere bevorzugt sind Siliziumdioxid, Aluminiumoxid, Hydroxyaluminiumoxid, Calciumcarbonat, Magnesiumcarbonat, Calciumorthophosphat, Hydroxylapatit und Titandioxid.

Vorteilhaft können auch die kommerziell verfügbaren Verbindungen der Aerosil®-, Levasil®-, Ludox®-, Nyacol®- und Bindzil®-Marken (Siliziumdioxid), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) im erfindungsgemäßen Verfahren eingesetzt werden.

Die im erfindungsgemäßen Verfahren einsetzbaren feinteiligen anorganischen Feststoffe sind so beschaffen, daß die im wäßrigem Reaktionsmedium dispergierten Feststoffteilchen einen gewichtsmittleren Teilchendurchmesser von ≤ 100 nm aufweisen. Erfolgreich werden solche feinteiligen anorganischen Feststoffe eingesetzt, deren dispergierte Teilchen einen gewichtsmittleren Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Die Ermittlung der gewichtsmittleren Teilchendurchmesser kann beispielsweise über die Methode der Analytischen Ultrazentrifuge erfolgen (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175).

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt durch Eindispergieren des feinteiligen anorganischen Feststoffs in das wäßrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder durch Zusatz geeigneter Hilfsstoffe, wie beispielsweise Dispergiermittel.

Erfindungsgemäß werden im Rahmen des vorliegenden Verfahrens Dispergiermittel mitverwendet, die sowohl die feinteiligen anorganischen Feststoffteilchen als auch die Monomerentröpfchen und die gebildeten Kompositpartikel in der wäßrigen Phase dispers verteilt halten und so die Stabilität der erzeugten wäßrigen Kompositpartikeldispersion gewährleisten. Als Dispergiermittel kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke- und Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

weisen die dispergierten anorganischen Feststoffteilchen eine elektrophoretische Mobilität mit negativem Vorzeichen auf, sind erfindungsgemäß neutrale Schutzkolloide, wie beispielsweise Polyvinylalkohole, Polyalkylenglykole, Cellulose-, Stärke- und Gelatinederivate sowie anionische Schutzkolloide, d.h. Schutzkolloide, deren dispergierend wirkende Komponente wenigstens eine negative elektrische Ladung aufweist, wie Alkalimetallsalze von Polyacrylsäuren und Polymethacrylsäuren, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, gut geeignet. Weisen die dispergierten anorganischen Feststoffteilchen dagegen eine elektrophoretische Mobilität mit positivem Vorzeichen auf, sind erfindungsgemäß ebenfalls neutrale Schutzkolloide, wie beispielsweise die bereits vorgenannten Polyvinylalkohole, Polyalkylenglykole, Cellulose-, Stärke- und Gelatinederivate, aber auch kationische Schutzkolloide, d.h. Schutzkolloide, deren dispergierend wirkende Komponente wenigstens eine positive elektrische Ladung aufweist, wie beispielsweise die am Stickstoff protonierten und/oder alkylierten Derivate von N-Vinylpyrrolidon, N-Vinylcaprolactam, N-vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate, gut geeignet. Prinzipiell können bei dispergierten Feststoffteilchen mit einer elektrophoretische Mobilität mit negativem Vorzeichen auch Gemische sich nicht störender neutraler und anionischer Schutzkolloide eingesetzt werden. Entsprechend lassen sich bei Feststoffteilchen mit einer elektrophoretische Mobilität mit positivem Vorzeichen auch Gemische sich nicht störender neutraler und kationischer Schutzkolloide verwenden.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.
Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol® A-Marken (C₁₂C₁₄-Fettalkoholethoxilate, EO-Grad: 3 bis 8), Lutensol® AO-Marken (C₁₃C₁₅-Oxoalkoholethoxilate, EO-Grad: 3 bis 30), Lutensol® AT-Marken (C₁₆C₁₈-Fettalkoholethoxilate, EO Grad: 11 bis 80), Lutensol® ON-Marken (C₁₀-Oxoalkoholethoxilate, EO-Grad: 3 bis 11) und die Lutensol® TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel I 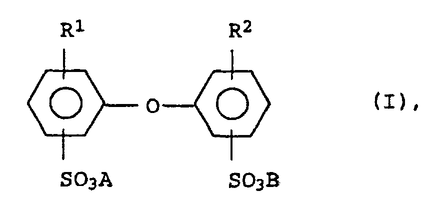 worin R¹ und R² H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel eine C₆- bis C₁₈-Alkyl- oder -Aralkylgruppe- oder einen heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in Mc Cutcheon's, Emulsifiers & Detergents, MC Publishing Company, Glen Rock, 1989.

Da nichtionische Emulgatoren sowohl bei dispergierten Feststoffteilchen einsetzbar sind, die eine elektrophoretischen Mobilität mit positivem oder negativem Vorzeichen aufweisen, sind sie erfindungsgemäß besonders gut geeignet. Bei dispergierten Feststoffteilchen mit einer elektrophoretischen Mobilität mit positivem Vorzeichen sind darüber hinaus auch kationische Emulgatoren oder Gemische aus sich nicht störenden nichtionischen und kationischen Emulgatoren einsetzbar. In entsprechender Weise eignen sich für die dispergierten Feststoffteilchen mit einer elektrophoretischen Mobilität mit negativem Vorzeichen anionische Emulgatoren oder Gemische aus sich nicht störenden nichtionischen und anionischen Emulgatoren.

In der Regel werden 0,05 bis 20 Gew.-%, häufig 0,1 bis 5 Gew.-%, oft 0,2 bis 3 Gew.-% an Dispergiermittel, jeweils bezogen auf die Gesamtmenge des wenigstens einen feinteiligen anorganischen Feststoffs und dem zur Polymerisation eingesetzten Gemisch aus ethylenisch ungesättigten Monomeren, verwendet. Dabei kann die Gesamtmenge des im Verfahren verwendeten wenigstens einen Dispergiermittels in der wäßrigen Feststoffdispersion vorgelegt werden. Es ist jedoch auch möglich, gegebenenfalls lediglich eine Teilmenge des wenigstens einen Dispergiermittels, in der wäßrigen Feststoffdispersion vorzulegen und die Gesamtmenge bzw. die gegebenenfalls verbliebene Restmenge des wenigstens einen Dispergiermittels während der radikalischen Emulsionspolymerisation kontinuierlich oder diskontinuierlich zuzugeben.

Erfindungsgemäß sind jedoch nur solche feinteiligen anorganischen Feststoffe geeignet, deren wäßrige Feststoffdispersion bei einer Anfangsfeststoffkonzentration von ≥ 1 Gew.-%, bezogen auf die wäßrige Dispersion des feinteiligen anorganischen Feststoffs, noch eine Stunde nach ihrer Herstellung mehr als 90 Gew.-% des ursprünglich dispergierten Feststoffes in dispergierter Form enthält und deren dispergierten Feststoffteilchen einen gewichtsmittleren Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 2 Gew.-%, ≥ 3 Gew.-%, ≥ 4 Gew.-% oder ≥ 5 Gew.-% und alle Werte dazwischen, jeweils bezogen auf die wäßrige Dispersion des feinteiligen anorganischen Feststoffs, eingesetzt werden.

Erfindungswesentlich ist, daß die dispergierten Feststoffteilchen in einer wäßrigen Standardkaliumchlorid-Lösung bei einem pH-Wert, der dem pH-Wert des wäßrigen Reaktionsmediums am Beginn der Emulsionspolymerisation entspricht, eine von Null verschiedene elektropheretische Mobilität zeigen. Unter wäßrigem Reaktionsmedium am Beginn der Emulsionspolymerisation wird in dieser Schrift das wäßrige Reaktionsmedium verstanden, das unmittelbar vor Zugabe des wenigstens einen radikalischen Polymerisationsinitiators vorliegt. Die pH-Wertbestimmung erfolgt bei 20°C und 1 bar (absolut) mit handelsüblichen pH-Meßgeräten. Abhängig vom durchgeführten Verfahren erfolgt die pH-Messung daher an einer wäßrigen Dispersion, welche lediglich den wenigstens einen feinteiligen anorganischen Feststoff oder zusätzlich das wenigstens eine Dispergiermittel und/oder zusätzlich die zur Emulsionspolymerisation eingesetzten Monomeren sowie gegebenenfalls weitere Hilfsstoffe enthält.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wäßrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20°C und 1 bar (absolut) bestimmt. Hierzu wird die wäßrige Feststoffteilchendispersion mit einer pH-neutralen 10 millimolaren (mM) wäßrigen Kaliumchlorid-Lösung (Standardkaliumchlorid-Lösung) soweit verdünnt, daß die Feststoffteilchen-Konzentration ca. 50 bis 100 mg/l beträgt. Die Einstellung der Meßprobe auf den pH-Wert, den das wäßrige Reaktionsmedium am Beginn der Emulsionspolymerisation aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Werden oberflächenmodifizierte Feststoffteilchen, wie sie beispielsweise im Stand der Technik beschrieben sind, eingesetzt, so wird die Bestimmung der elektrophoretischen Mobilität mit diesen oberflächenmodifizierten Teilchen durchgeführt. Ist dagegen ein feinteiliger anorganischer Feststoff nur mit Hilfe von Dispergiermitteln dispergierbar, so muß die Bestimmung der elektrophoretischen Mobilität mit geeigneten nichtionischen Dispergiermitteln erfolgen, und zwar unabhängig davon, ob im erfindungsgemäßen Verfahren tatsächlich kationische oder anionische Dispergiermittel eingesetzt werden. Dies ist deshalb erforderlich, weil sich die ionischen Dispergiermittel auf den dispergierten Feststoffteilchen adsorbieren und so deren elektrophoretische Mobilität verändern bzw. umkehren können.

Ein geeigneter Parameter, um die elektrophoretische Mobilität von dispergierten Feststoffteilchen in einem gewissen Umfang zu beeinflussen oder einzustellen, ist der pH-Wert des wäßrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das erfindungsgemäße Verfahren geeigneter pH-Bereich ist der, innerhalb dessen sich eine radikalisch initiierte wäßrige Emulsionspolymerisation durchführen läßt. Dieser pH-Bereich liegt in der Regel bei pH 1 bis 12, häufig bei pH 1,5 bis 11 und oft bei pH 2 bis 10.

Der pH-Wert des wäßrigen Reaktionsmediums kann mittels handelsüblicher Säuren, wie beispielsweise verdünnte Salzsäure oder Basen, wie beispielsweise verdünnte Natronlauge, eingestellt werden. Häufig ist es günstig, wenn eine Teil- oder die Gesamtmenge der zur pH-Einstellung verwendeten Säure- oder Basenmenge dem wäßrigen Reaktionsmedium vor dem wenigstens einen feinteiligen anorganischen Feststoff zugesetzt wird.

Die Durchführung einer radikalisch initiierten wäßrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2^{nd} Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Sie erfolgt üblicherweise so, daß man die ethylenisch ungesättigten Monomeren, häufig unter Mitverwendung von Dispergiermitteln, in wäßrigem Medium dispers verteilt und mittels wenigstens eines radikalischen Polymerisationsinitiators polymerisiert. Von dieser Verfahrensweise unterscheidet sich das erfindungsgemäße verfahren lediglich durch ein zusätzliches Beisein von wenigstens einem feinteiligen anorganischen Feststoff, welcher eine von Null verschiedene elektrophoretische Mobilität aufweist sowie von wenigstens einem Monomeren A.

Für das erfindungsgemäße Verfahren kommen als ethylenisch ungesättigte Monomere u.a. insbesondere in einfacher Weise radikalisch polymerisierbare nichtionische Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, - n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von mehr als 86 Gew.-% auf sich vereinen. In aller Regel weisen diese Monomeren in Wasser bei Normalbedingungen [20°C, 1 bar (absolut)] lediglich eine mäßige bis geringe Löslichkeit auf.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, häufig in Mengen von bis zu 10 Gew.-% einpolymerisiert.

Als Monomere A werden erfindungsgemäß solche ethylenisch ungesättigten Monomere eingesetzt, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten.

Weisen die dispergierten Feststoffteilchen des wenigstens einen anorganischen Feststoffs eine elektrophoretische Mobilität mit positivem Vorzeichen auf, werden als Monomere A ethylenisch ungesättigte Monomere mit wenigstens einer Säuregruppe eingesetzt, deren Säuregruppe ausgewählt ist aus der Gruppe umfassend die Carbonsäure-, Sulfonsäure-, Schwefelsäure-, Phosphorsäure- und Phosphonsäuregruppe. Beispiele hierfür sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von 2-Hydroxyethylacrylat, 3-Hydroxypropylacrylat, 4-Hydroxybutylacrylat und 2-Hydroxyethylmethacrylat, 3-Hydroxypropylmethacrylat oder 4-Hydroxybutylmethacrylat. Erfindungsgemäß lassen sich aber auch die Ammonium- und Alkalimetallsalze der vorgenannten wenigstens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von 2-Hydroxyethylacrylat, 3-Hydroxypropylacrylat, 4-Hydroxybutylacrylat und 2-Hydroxyethylmethacrylat, 3-Hydroxypropylmethacrylat oder 4-Hydroxybutylmethacrylat. Ferner lassen sich Anhydride ethylenisch ungesättigter Säuren, wie beispielsweise das Maleinsäureanhydrid sowie ethylenisch ungesättigte Monomere mit wenigstens einer CH-aciden Funktion, wie beispielsweise 2-(Acetylacetoxy)ethylmethacrylat als Monomer A einsetzen.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure eingesetzt.

Weisen die dispergierten anorganischen Feststoffteilchen des wenigstens einen anorganischen Feststoffs jedoch eine elektrophoretische Mobilität mit negativem Vorzeichen auf, werden als Monomere A ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere A, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino)ethylacrylat (beispielsweise kommerziell verfügbar als Norsocryl® ADAME der Fa. Elf Atochem), 2-(N,N-Dimethylamino)ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylainino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere A, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere A, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere A, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Abhängig vom pH-Wert des wäßrigen Reaktionsmediums kann ein Teil oder die Gesamtmenge der vorgenannten stickstoffhaltigen Monomere A in der am Stickstoff protonierten quartären Ammoniumform vorliegen.

Als Monomere A, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Elf Atochem), 2-(N,N,N-Trimethylammonium)ethylmethacrylatchlorid (beispielsweise kommerziell verfügbar als Norsocryl® MADQUAT MC 75 der Fa. Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-di-n-propylammonium)ethylacrylatchlorid, 2-(N-Methyl-N,N-di-n-propylammonium)ethylmethacrylat, 2-(N-Benzyl-N,N-dimethylammonium)ethylacrylatchlorid (beispielsweise kommerziell verfügbar als Norsocryl® ADAMQUAT BZ 80 der Fa. Elf Atochem), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-di-n-propylammonium)ethylacrylatchlorid, 2-(N-Benzyl-N,N-di-n-propylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-di-n-propylammonium)propylacrylatchlorid, 3-(N-Methyl-N,N-di-n-propylammonium)propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-di-n-propylammonium)propylacrylatchlorid und 3-(N-Benzyl-N,N-di-n-propylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium)ethylmethacrylatchlorid verwendet.

Im erfindungsgemäßen Verfahren werden Gemische aus ethylenisch ungesättigten Monomeren eingesetzt, die, bezogen auf ihre Gesamtmenge, > 0 und < 4 Gew.-%, in der Regel 0,05 bis 3,0 Gew.-%, häufig 0,1 bis 2,5 Gew.-% und oft 0,2 bis 2,0 Gew.-% des wenigstens einen Monomeren A enthalten.

Der Gewichtsanteil des Gemisches aus ethylenisch ungesättigten Monomeren, bezogen auf die Gesamtmenge des wenigstens einen feinteiligen anorganischen Feststoffs und des Gemisches aus ethylenisch ungesättigten Monomeren, beträgt in der Regel zwischen 10 und 99 Gew.-%, häufig zwischen 25 und 90 Gew.-% und oft zwischen 40 und 80 Gew.-%. Erfindungsgemäß kann die Gesamtmenge des Monomerengemisches gemeinsam mit dem wenigstens einen feinteiligen anorganischen Feststoff im Reaktionsmedium vorgelegt werden. Es ist aber auch möglich, gegebenenfalls lediglich eine Teilmenge des Monomerengemisches in der wäßrigen Feststoffdispersion vorzulegen und dann während der radikalischen Emulsionspolymerisation die Gesamtmenge bzw. die gegebenenfalls verbliebene Restmenge des Monomerengemisches nach Maßgabe des Verbrauchs kontinuierlich oder diskontinuierlich zuzugeben.

Als wenigstens ein radikalischer Polymerisationsinitiator kommen für die erfindungsgemäße radikalische wäßrige Emulsionpolymerisation alle diejenigen in Betracht, die in der Lage sind, eine radikalische wäßrige Emulsionspolymerisation im Beisein des wenigstens eines feinteiligen anorganischen Feststoffes auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, - Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 3 Gew.-%.

Weisen die dispergierten Feststoffteilchen des wenigstens einen anorganischen Feststoffs eine elektrophoretische Mobilität mit negativem Vorzeichen auf, werden als wenigstens ein radikalischer Polymerisationsinitiator, bevorzugt Peroxodisulfate, wie die Mono- oder Di-Alkalimetall- oder Ammoniumsalze der Peroxodischwefelsäure, wie beispielsweise die Mono- und Di-Natrium-, -Kaliumoder Ammoniumsalze der Peroxodischwefelsäure sowie Wasserstoffperoxid in alkalischem Medium verwendet.

Weisen die dispergierten Feststoffteilchen des wenigstens einen anorganischen Feststoffs eine elektrophoretische Mobilität mit positivem Vorzeichen auf, wird als wenigstens ein radikalischer Polymerisationsinitiator bevorzugt AIBA eingesetzt.

Erfindungsgemäß kann die Gesamtmenge des wenigstens einen radikalischen Polymerisationsinitiators gemeinsam mit dem wenigstens einen feinteiligen anorganischen Feststoff im Reaktionsmedium vorgelegt werden. Es ist aber auch möglich, gegebenenfalls lediglich eine Teilmenge des wenigstens einen radikalischen Polymerisationsinitiators in der wäßrigen Feststoffdispersion vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Als Reaktionstemperatur für die erfindungsgemäße radikalische wäßrige Emulsionspolymerisation im Beisein des wenigstens einen feinteiligen anorganischen Feststoffes kommt der gesamte Bereich von 0 bis 170°C in Betracht. Dabei werden in der Regel Temperaturen von 50 bis 120°C, häufig 60 bis 110°C und of t ≥ 70 bis 100°C angewendet. Die erfindungsgemäße radikalische wäßrige Emulsionspolymerisation kann bei einem Druck kleiner, gleich oder größer 1 bar (absolut) durchgeführt werden, so daß die Polymerisationstemperatur 100°C übersteigen und bis zu 170°C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wäßrige Emuslionspolymerisation bei 1 bar (absolut) unter Inertgasatmosphäre, wie beispielsweise unter Stickstoff oder Argon durchgeführt.

Das wäßrige Reaktionsmedium kann prinzipiell auch wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Erfindungswesentlich ist, daß die dispergierten Feststoffteilchen des wenigstens einen anorganischen Feststoffes unter den oben beschriebenen Bedingungen eine von Null verschiedene elektrophoretische Mobilität aufweisen. Ist dabei das Vorzeichen der elektrophoretischen Mobilität positiv, werden als Monomere A solche ethylenisch ungesättigten Monomere eingesetzt, die wenigstens eine Säuregruppe und/oder deren entsprechendes Anion enthalten. Ist dagegen das Vorzeichen der elektrophoretischen Mobilität negativ, werden als Monomere A solche ethylenisch ungesättigten Monomere eingesetzt, die wenigstens eine Amino-, Amido-, Ureidooder N-heterocyclische Gruppe und/oder die daraus ableitbaren Ammoniumderivate enthalten.

Das erfindungsgemäße Verfahren kann beispielsweise so ausgeübt werden, daß man eine stabile wäßrige Dispersion des wenigstens einen feinteiligen anorganischen Feststoffs, enthaltend entweder eine Teil- oder die Gesamtmenge des benötigten Wassers, des wenigstens einen Dispergiermittels, des wenigstens einen Polymerisationsinitiators und/oder des Monomerengemisches sowie der gegebenenfalls weiteren üblichen Hilfs- und Zusatzstoffe in einem Reaktionsbehälter vorlegt und den Inhalt des Reaktionsbehälters auf Reaktionstemperatur aufheizt. Bei dieser Temperatur werden unter Rühren die gegebenenfalls verbliebenen Restmengen des Wassers, des wenigstens einen Dispergiermittels, des Monomerengemisches sowie der gegebenenfalls weiteren üblichen Hilfs- und Zusatzstoffe kontinuierlich oder diskontinuierlich zugesetzt und anschließend gegebenenfalls noch weiter auf Reaktionstemperatur gehalten.

Das erfindungsgemäße Verfahren kann aber auch so durchgeführt werden, daß man eine stabile wäßrige Dispersion des wenigstens einen feinteiligen anorganischen Feststoffs, enthaltend entweder eine Teil- oder die Gesamtmenge des benötigten Wassers, des wenigstens einen Dispergiermittels und/oder der gegebenenfalls weiteren üblichen Hilfs- und Zusatzstoffe und gegebenenfalls lediglich eine Teilmenge des Monomerengemisches und/oder des wenigstens einen Polymerisationsinitiators in einem Reaktionsbehälter vorlegt und den Inhalt des Reaktionsbehälters auf Reaktionstemperatur aufheizt. Bei dieser Temperatur wird unter Rühren die Gesamt- oder die gegebenenfalls verbliebene Restmenge des Monomerengemisches und/oder des wenigstens einen Polymerisationsinitiators sowie die gegebenenfalls verbliebenen Restmengen des Wassers, des wenigstens einen Dispergiermittels und/oder der gegebenenfalls weiteren üblichen Hilfs- und Zusatzstoffe kontinuierlich oder diskontinuierlich zugesetzt und anschließend gegebenenfalls weiter auf Reaktionstemperatur gehalten.

Die erfindungsgemäß zugänglichen Kompositpartikel besitzen in der Regel Teilchendurchmesser von ≤ 5000 nm, häufig ≤ 1000 nm und oft ≤ 400 nm. Die Bestimmung der Teilchendurchmesser erfolgt üblicherweise durch transmissionselektronenmikroskopische Untersuchungen (vgl. z.B. L. Reimer, Transmission Electron Microscopy, Springer-Verlag, Berlin, Heidelberg, 1989; D.C. Joy, The Basic Principles of EELS in Principles of Analytical Electron Microskopy, herausgegeben von D.C. Joy, A.D. Romig, Jr. und J.I. Goldstein, Plenum Press, New York, 1986; L.C. Sawyer und D.T. Grupp, Polymer Microscopy, Chapman and Hall, London, 1987).

Die nach dem erfindungsgemäßen Verfahren erhältlichen Kompositpartikel können unterschiedliche Strukturen aufweisen. Häufig werden Kompositpartikel mit himbeerförmigem Aufbau erhalten. Die erfindungsgemäßen Kompositpartikel können ein oder mehrere der feinteiligen Feststoffteilchen enthalten. Die feinteiligen Feststoffteilchen können vollständig von der Polymermatrix umhüllt sein. Es ist aber auch möglich, daß ein Teil der feinteiligen Feststoffteilchen von der Polymermatrix umhüllt ist, während ein anderer Teil auf der Oberfläche der Polymermatrix angeordnet ist. Selbstverständlich ist es auch möglich, daß ein Großteil der feinteiligen Feststoffteilchen auf der Oberfläche der Polymermatrix gebunden ist. Bevorzugt sind ≥ 50 Gew.-% oder ≥ 60 Gew.-%, häufig ≥ 70 Gew.-% oder ≥ 80 Gew.-% und of t ≥ 85 Gew.-% oder ≥ 90 Gew.-% der feinteiligen Feststoffteilchen, jeweils bezogen auf die Gesamtmenge der in den Kompositpartikeln enthaltenen feinteiligen Feststoffteilchen, auf der Oberfläche der Polymermatrix gebunden. Zu beachten ist, daß es in Einzelfällen, abhängig von der Feststoffkonzentration der dispergierten Kompositpartikel, auch zu einer geringen Teilagglomeration der Kompositpartikel kommen kann.

Selbstverständlich können die nach Abschluß der Hauptpolymerisationsreaktion in der wäßrigen Dispersion der Kompositpartikel verbliebenen Monomerenrestmengen durch Dampf- und/oder Inertgasstrippung und/oder durch chemische Desodorierung, wie sie beispielsweise in den Schriften DE-A 4 419 518, EP-A 767 180 oder DE-A 3 834 734 beschrieben sind, entfernt werden, ohne daß sich die Eigenschaften der wäßrigen Kompositpartikeldispersion nachteilig verändern.

Wäßrige Dispersionen von Kompositpartikeln, welche nach dem beschriebenen erfindungsgemäßen Verfahren hergestellt werden, eignen sich als Rohstoffe zur Herstellung von Klebstoffen, wie beispielsweise Haftklebstoffen, Bauklebstoffen oder Industrieklebstoffen, Bindemitteln, wie beispielsweise für die Papierstreicherei, Dispersionsfarben oder für Druckfarben und Drucklacke zum Bedrucken von Kunststofffolien, zur Herstellung von Vliesstoffen sowie zur Herstellung von Schutzschichten und Wasserdampfsperren, wie beispielsweise bei der Grundierung. Ferner lassen sich die dem erfindungsgemäßen Verfahren zugänglichen Kompositpartikeldispersionen auch zur Modifizierung von Zement- und Mörtelformulierungen nutzen. Die nach dem erfindungsgemäßen Verfahren zugänglichen Kompositpartikel lassen sich prinzipiell auch in der medizinischen Diagnostik sowie in anderen medizinischen Anwendungen einsetzen (vgl. z.B. K- Mosbach und L. Andersson, Nature, 1977, 270, Seiten 259 bis 261; P.L. Kronick, Science 1978, 200, Seiten 1074 bis 1076; US-A 4,157,323). Darüber hinaus lassen sich die Kompositpartikel auch als Katalysatoren in verschiedenen wäßrigen Dispersionssystemen einsetzen.

Auch sei festgehalten, daß die erfindungsgemäß erhältlichen wäßrigen Dispersionen von Kompositpartikeln in einfacher Weise zu redispergierbaren Kompositpartikelpulvern trockenbar sind (z.B. Gefriertrocknung oder Sprühtrocknung). Dies gilt insbesondere dann, wenn die Glasübergangstemperatur der Polymermatrix der erfindungsgemäß zugänglichen Kompositpartikel ≥ 50°C, vorzugsweise ≥ 60°C, besonders bevorzugt ≥ 70°C, ganz besonders bevorzugt ≥ 80°C und insbesondere bevorzugt ≥ 90°C bzw. ≥ 100°C beträgt. Die Kompositpartikelpulver eignen sich als u.a. als Additive für Kunststoffe, Komponenten für Tonerformulierungen oder Zusatzstoffe in elektrophotographischen Anwendungen.

### Beispiele

Für die folgenden Beispiele wurde als feinteiliger anorganischer Feststoff Siliziumdioxid, Yttrium-(III)-oxid und Cer-(IV)-oxid verwendet. Exemplarisch wurden die kommerziell verfügbaren Siliziumdioxidsole Nyacol® 2040 (20 nm) und Nyacol® 830 (10 nm) der Firma Akzo-Nobel sowie Ludox® HS30 (12 nm) der Firma Dupont eingesetzt. Ebenfalls eingesetzt wurden Nyacol® YTTRIA [Yttrium-(III)-oxid) (10 nm) und Nyacol® CEO2 {ACT} [Cer-(IV)-oxid] (10 bis 20 nm). Die in runden Klammern angegebenen Werte entsprechen den Durchmessern der jeweiligen anorganischen Feststoffteilchen nach Herstellerangaben.

Die in den Beispielen verwendeten Feststoffdispersionen erfüllten alle an sie gestellten Forderungen, nämlich, daß sie bei einer Anfangsfeststoffkonzentration von ≥ 1 Gew.-%, bezogen auf die wäßrige Dispersion des Feststoffes, noch eine Stunde nach ihrer Herstellung mehr als 90 Gew.-% des ursprünglich dispergierten Feststoffes in dispergierter Form enthielten und deren dispergierte Feststoffteilchen einen gewichtsmittleren Durchmesser ≤ 100 nm aufwiesen und darüber hinaus die dispergierten anorganischen Feststoffteilchen in einer wäßrigen Standardkaliumchlorid-Lösung bei einem pH-Wert, der dem pH-Wert des wäßrigen Reaktionsmediums am Beginn der Emulsionspolymerisation entsprach, eine von Null verschiedene elektrophoretische Mobilität zeigten.

### 1. Beispiel

In einem 500 ml Vierhalskolben, ausgerüstet mit einem Rückflußkühler, einem Thermometer, einem mechanischem Rührer sowie einer Dosiervorrichtung, wurden unter Stickstoffatmosphäre bei 20°C und 1 bar (absolut) 80 g entionisiertes und sauerstofffreies Wasser sowie 0,04 g 1 M Natronlauge vorgelegt und unter Rühren (250 Umdrehungen pro Minute) 20 g Nyacol® 2040 zugegeben. Danach heizte man das Reaktionsgemisch auf eine Reaktionstemperatur von 75°C auf. Der pH-Wert dieser wäßrigen Phase, gemessen bei Raumtemperatur, betrug 10.

Parallel stellte man eine wäßrige Emulsion, bestehend aus 10 g Styrol, 10 g n-Butylacrylat, 0,19 g 1 M Natronlauge, 80 g entionisiertem und sauerstofffreiem Wasser, 1 g einer 20 gew.-%igen wäßrigen Lösung des nichtionischen Emulgators Lutensol® AT18 (Marke der BASF AG, C₁₆C₁₈-Fettalkoholethoxilat mit 18 Ethylenoxid-Einheiten) und 0,25 g Norsocryl® ADAMQUAT MC 80 (80 gew.-%ige wäßrige Lösung von 2-(N,N,N-Trimethylammonium) ethylacrylatchlorid) her (Zulauf 1). Eine Initiatorlösung wurde aus 0,23 g Ammoniumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene wäßrige Kompositpartikeldispersion wies einen Feststoffgehalt von 11,4 Gew.-%, bezogen auf das Gesamtgewicht der wäßrigen Kompositpartikeldispersion, auf.

Transmissionselektronenmikroskopische Untersuchungen, der mit entionisiertem Wasser auf einen Feststoffgehalt von etwa 0,01 Gew.-% verdünnten wäßrigen Kompositpartikeldispersion, mit einem Zeiss 902-Gerät der Fa. Zeiss wiesen himbeerförmige Kompositpartikel mit einem Durchmesser von etwa 250 nm auf. Freie Siliziumdioxidteilchen ließen sich praktisch nicht nachweisen.

Durch Zentrifugieren der Kompositpartikeldispersion (3000 Umdrehungen pro Minute, Dauer 20 Minuten) wurde vollständige Sedimentation der dispergierten Partikel erzielt. In der überstehenden wasserklaren Lösung ließen sich durch transmissionselektronenmikroskopische Untersuchungen keine Siliziumdioxidteilchen nachweisen.

Die Vorzeichenbestimmung der elektrophoretischen Mobilität erfolgte bei den feinteiligen anorganischen Feststoffen generell mittels des Zetasizer 3000 der Fa. Malvern Instruments Ltd., Großbritannien. Hierzu verdünnte man die feinteilige anorganische Feststoffdispersion mit wäßriger pH-neutraler 10 mM Kaliumchlorid-Lösung (Standardkaliumchlorid-Lösung) soweit, daß deren Feststoffteilchenkonzentration zwischen 50 und 100 mg pro Liter lag. Mittels verdünnter Salzsäure oder verdünnter Natronlauge stellte man den pH-Wert ein, den das wäßrige Reaktionsmedium unmittelbar vor Zugabe des Polymerisationsinitiators aufwies.

Mittels 1 M Natronlauge stellte man bei der auf 60 mg/l Siliziumdioxidfeststoffgehalt verdünnten Nyacol® 2040-Dispersion einen pH-Wert von 10 ein. Die elektrophoretische Mobilität der Siliziumdioxidteilchen in Nyacol® 2040 wies dabei ein negatives Vorzeichen auf.

Der Feststoffgehalt wurde generell bestimmt, indem ca. 1 g der Kompositpartikeldispersion in einem offenen Aluminiumtiegel mit einem Innendurchmesser von ca. 3 cm in einem Trockenschrank 2 Stunden bei 150°C getrocknet wurde. Zur Bestimmung des Feststoffgehalts wurden jeweils zwei separate Messungen durchgeführt und der entsprechende Mittelwert gebildet.

### 1. Vergleichsbeispiel

Beispiel 1 wurde wiederholt mit der Ausnahme, daß anstelle von 0,25 g Norsocryl® ADAMQUAT MC 80 0,25 g entionisiertes und sauerstofffreies Wasser eingesetzt wurde.

Die gebildete Partikeldispersion wies einen Feststoffgehalt von 11,1 Gew.-%, bezogen auf das Gesamtgewicht der wäßrigen Partikeldispersion, auf. Das erhaltene trübe Reaktionsgemisch wurde mittels transmissionselektronenmikroskopischer Messungen untersucht. Himbeerförmige Kompositpartikel waren nicht nachweisbar.

Durch Zentrifugieren der trüben Dispersion (3000 Umdrehungen pro Minute, Dauer 20 Minuten) konnte keine Sedimentation der dispergierten Partikel erreicht werden.

### 2. Vergleichsbeispiel

Beispiel 1 wurde wiederholt mit der Ausnahme, daß anstelle von 0,25 g Norsocryl® ADAMQUAT MC 80 0,2 g des Natriumsalzes der 4-Styrolsulfonsäure verwendet wurde.

Die gebildete Partikeldispersion wies einen Feststoffgehalt von 11,4 Gew.-%, bezogen auf das Gesamtgewicht der wäßrigen Partikeldispersion, auf. Das erhaltene trübe Reaktionsgemisch wurde mittels transmissionselektronenmikroskopische Messungen untersucht. Himbeerförmige Kompositpartikel waren nicht nachweisbar.

Durch Zentrifugieren der trüben Dispersion (3000 Umdrehungen pro Minute, Dauer 20 Minuten) konnte keine Sedimentation der dispergierten Partikel erreicht werden.

### 2. Beispiel

In einem 500 ml Vierhalskolben wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wäßrige Phase mit 1,62 g 1 M Salzsäure auf einen pH-Wert von 2,5 ein und füllte sie mit Wasser, das mit 1 M Salzsäure auf einen pH-Wert von 2,5 eingestellt worden war, auf 100 g auf. Danach heizte man das Reaktionsgemisch auf eine Reaktionstemperatur von 75°C auf. Der pH-Wert dieser wäßrigen Phase, gemessen bei Raumtemperatur, betrug 2,5.

Parallel stellte man eine wäßrige Emulsion, bestehend aus 10 g Styrol, 10 g n-Butylacrylat, 80 g entionisiertem und sauerstofffreiem Wasser, 0,44 g einer 45 gew.-%igen wäßrigen Lösung von Dowfax® 2A1 sowie 0,2 g 4-Vinylpyridin her (Zulauf 1). Eine Initiatorlösung wurde aus 0,23 g Ammoniumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 11,5 Gew.-%, bezogen auf das Gesamtgewicht der wäßrigen Kompositpartikeldispersion, auf. Das Vorliegen von himbeerförmigen Kompositpartikeln mit einem Durchmesser von etwa 200 bis 300 nm wurde mittels transmissionselektronenmikroskopischer Untersuchungen nachgewiesen. Freie Siliziumdioxidteilchen ließen sich praktisch nicht nachweisen.

Die Siliziumdioxidteilchen von Nyacol® 2040 wiesen bei einem pH-Wert von 2,5 eine elektrophoretische Mobilität mit negativem Vorzeichen auf.

Durch Zentrifugieren der Kompositpartikeldispersion (3000 Umdrehungen pro Minute, Dauer 20 Minuten) wurde vollständige Sedimentation der dispergierten Partikel erzielt. In der überstehenden wasserklaren Lösung ließen sich durch transmissionselektronenmikroskopische Untersuchungen praktisch keine Siliziumdioxidteilchen nachweisen.

### 3. Vergleichsbeispiel

Beispiel 2 wurde wiederholt mit der Ausnahme, daß anstelle von 0,2 g 4-Vinylpyridin 0,2 g entionisiertes und sauerstofffreies Wasser eingesetzt wurden.

Die gebildete Partikeldispersion wies einen Feststoffgehalt von 11,6 Gew.-%, bezogen auf das Gesamtgewicht der wäßrigen Partikeldispersion, auf. Das erhaltene trübe Reaktionsgemisch wurde mittels transmissionselektronenmikroskopische Messungen untersucht. Himbeerförmige Kompositpartikel waren nicht nachweisbar.

Durch Zentrifugieren der trüben Dispersion (3000 Umdrehungen pro Minute, Dauer 20 Minuten) konnte keine Sedimentation der dispergierten Partikel erreicht werden.

### 4. Vergleichsbeispiel

Beispiel 2 wurde wiederholt mit der Ausnahme, daß anstelle von 0,2 g 4-Vinylpyridin 0,2 g des Natriumsalzes der 4-Styrolsulfonsäure eingesetzt wurde.

Die gebildete Partikeldispersion wies einen Feststoffgehalt von 11,5 Gew.-%, bezogen auf das Gesamtgewicht der wäßrigen Partikeldispersion, auf. Das erhaltene trübe Reaktionsgemisch wurde mittels transmissionselektronenmikroskopische Messungen untersucht. Himbeerförmige Kompositpartikel waren nicht nachweisbar.

Durch Zentrifugieren der trüben Dispersion (3000 Umdrehungen pro Minute, Dauer 20 Minuten) konnte keine Sedimentation der dispergierten Partikel erreicht werden.

### 3. Beispiel

In einem 500 ml Vierhalskolben wurden unter Stickstoffatmosphäre bei 20 °C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wäßrige Phase mit 1,62 g 1 M Salzsäure auf einen pH-Wert von 2,5 ein und füllte sie mit Wasser, das mit 1 M Salzsäure auf einen pH-Wert von 2,5 eingestellt worden war, auf 100 g auf. Danach heizte man das Reaktionsgemisch auf eine Reaktionstemperatur von 75°C auf. Der pH-Wert dieser wäßrigen Phase, gemessen bei Raumtemperatur, betrug 2,5.

Parallel stellte man eine wäßrige Emulsion, bestehend aus 10 g Styrol, 10 g n-Butylacrylat, 80 g entionisiertem und sauerstofffreiem Wasser, 1 g einer 20 gew.-%igen wäßrigen Lösung des nichtionischen Emulgators Lutensol® AT18 sowie 0,05 g 4-Vinylpyridin her (Zulauf 1). Eine Initiatorlösung wurde aus 0,23 g Ammoniumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 11,1 Gew.-%, bezogen auf das Gesamtgewicht der wäßrigen Kompositpartikeldispersion, auf. Das Vorliegen von himbeerförmigen Kompositpartikeln mit einem Durchmesser von etwa 220 nm wurde mittels transmissionselektronenmikroskopischer Untersuchungen nachgewiesen. Freie Siliziumdioxidteilchen ließen sich praktisch nicht nachweisen.

### 4. Beispiel

In einem 500 ml Vierhalskolben wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wäßrige Phase mit 0,5 g 1 M Salzsäure auf einen pH-Wert von 7 ein und füllte sie mit entionisiertem und sauerstofffreiem Wasser auf 100 g auf. Danach heizte man das Reaktionsgemisch auf eine Reaktionstemperatur von 85°C auf. Der pH-Wert dieser wäßrigen Phase, gemessen bei Raumtemperatur, betrug 7.

Parallel stellte man eine wäßrige Emulsion, bestehend aus 20 g Styrol, 80 g entionisiertem und sauerstofffreiem Wasser, 1 g einer 20 gew.-%igen wäßrigen Lösung des nichtionischen Emulgators Lutensol® AT18 sowie 0,2 g 4-Vinylpyridin her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 11,6 Gew.-%, bezogen auf das Gesamtgewicht der wäßrigen Kompositpartikeldispersion, auf. Das Vorliegen von himbeerförmigen Kompositpartikeln mit einem Durchmesser von etwa 140 bis 220 nm wurde mittels transmissionselektronenmikroskopischer Untersuchungen nachgewiesen. Freie Siliziumdioxidteilchen ließen sich praktisch nicht nachweisen.

Die Siliziumdioxidteilchen von Nyacol® 2040 wiesen bei einem pH-Wert von 7 eine elektrophoretische Mobilität mit negativem Vorzeichen auf.

### 5. Beispiel

Beispiel 4 wurde wiederholt mit der Ausnahme, daß das wäßrige Reaktionsmedium auf einen pH-Wert von 5 eingestellt wurde.

Für die Herstellung der Vorlage wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wäßrige Phase mit 1,0 g 1 M Salzsäure auf einen pH-Wert von 5 ein und füllte sie mit Wasser, das mit 1 M Salzsäure auf einen pH-Wert von 5 eingestellt worden war, auf 100 g auf. Danach heizte man das Reaktionsgemisch auf eine Reaktionstemperatur von 85°C auf. Der pH-Wert dieser wäßrigen Phase, gemessen bei Raumtemperatur, betrug 5.

Die so erhaltene Kompositpartikeldispersion wies einen Feststoffgehalt von 11,6 Gew.-%, bezogen auf das Gesamtgewicht der wäßrigen Kompositpartikeldispersion, auf. Das Vorliegen von himbeerförmigen Kompositpartikeln mit einem Durchmesser von etwa 170 nm wurde mittels transmissionselektronenmikroskopischer Untersuchungen nachgewiesen. Freie Siliziumdioxidteilchen ließen sich praktisch nicht nachweisen.

Die Siliziumdioxidteilchen von Nyacol® 2040 wiesen bei einem pH-Wert von 5 eine elektrophoretische Mobilität mit negativem Vorzeichen auf.

### 6. Beispiel

In einem 500 ml Vierhalskolben wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wäßrige Phase mit 1,62 g 1 M Salzsäure auf einen pH-Wert von 2,5 ein und füllte sie mit entionisiertem und sauerstofffreiem Wasser, das mit 1 M Salzsäure auf einen pH-Wert von 2,5 eingestellt worden war, auf 100 g auf. Danach heizte man das Reaktionsgemisch auf eine Reaktionstemperatur von 85°C auf. Der pH-Wert dieser wäßrigen Phase, gemessen bei Raumtemperatur, betrug 2,5.

Parallel stellte man eine wäßrige Emulsion, bestehend aus 20 g Styrol, 80 g entionisiertem und sauerstofffreiem Wasser, 2 g einer 20 gew.-%igen wäßrigen Lösung des nichtionischen Emulgators Lutensol® AT18 sowie 0,2 g 2-Vinylpyridin her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 10,5 Gew.-%, bezogen auf das Gesamtgewicht der wäßrigen Kompositpartikeldispersion, auf. Das Vorliegen von himbeerförmigen Kompositpartikeln mit einem Durchmesser von etwa 140 bis 180 nm wurde mittels transmissionselektronenmikroskopischer Untersuchungen nachgewiesen. Freie Siliziumdioxidteilchen ließen sich praktisch nicht nachweisen.

### 7. Beispiel

Beispiel 6 wurde wiederholt mit der Ausnahme, daß zur Herstellung von Zulauf 1 anstelle von 0,2 g 2-Vinylpyridin 0,2 g Norsocryl® MADAME [2-(N,N-(Dimethylamino)ethylmethacrylat)] verwendet wurden.

Die so erhaltene Kompositpartikeldispersion wies einen Feststoffgehalt von 11,8 Gew.-%, bezogen auf das Gesamtgewicht der wäßrigen Kompositpartikeldispersion, auf. Das Vorliegen von himbeerförmigen Kompositpartikeln mit einem Durchmesser von etwa 170 nm wurde mittels transmissionselektronenmikroskopischer Untersuchungen nachgewiesen. Freie Siliziumdioxidteilchen ließen sich praktisch nicht nachweisen.

### 8. Beispiel

In einem 500 ml Vierhalskolben wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wäßrige Phase mit 1,62 g 1 M Salzsäure auf einen pH-Wert von 2,5 ein und füllte sie mit entionisiertem und sauerstofffreiem Wasser, das mit 1 M Salzsäure auf einen pH-Wert von 2,5 eingestellt worden war, auf 100 g auf. Danach heizte man das Reaktionsgemisch auf eine Reaktionstemperatur von 85°C auf. Der pH-Wert dieser wäßrigen Phase, gemessen bei Raumtemperatur, betrug 2,5.

Parallel stellte man eine wäßrige Emulsion, bestehend aus 10 g Styrol, 10 g 2-Ethylhexylacrylat, 80 g entionisiertem und sauerstofffreiem Wasser, 1 g einer 20 gew.-%igen wäßrigen Lösung des nichtionischen Emulgators Lutensol® AT18 sowie 0,05 g 4-Vinylpyridin her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 11,5 Gew.-%, bezogen auf das Gesamtgewicht der wäßrigen Kompositpartikeldispersion, auf. Das Vorliegen von himbeerförmigen Kompositpartikeln mit einem Durchmesser von etwa 300 nm wurde mittels transmissionselektronenmikroskopischer Untersuchungen nachgewiesen. Freie Siliziumdioxidteilchen ließen sich praktisch nicht nachweisen.

### 9. Beispiel

Beispiel 8 wurde wiederholt mit der Ausnahme, daß zur Herstellung von Zulauf 1 anstelle von 10 g Styrol 10 g Methylmethacrylat verwendet wurden.

Die so erhaltene Kompositpartikeldispersion wies einen Feststoffgehalt von 11,1 Gew.-%, bezogen auf das Gesamtgewicht der wäßrigen Kompositpartikeldispersion, auf. Das Vorliegen von himbeerförmigen Kompositpartikeln mit einem Durchmesser von etwa 220 nm wurde mittels transmissionselektronenmikroskopischer Untersuchungen nachgewiesen. Freie Siliziumdioxidteilchen ließen sich praktisch nicht nachweisen.

### 10. Beispiel

Beispiel 9 wurde wiederholt mit der Ausnahme, daß zur Herstellung von Zulauf 1 anstelle von 10 g 2-Ethylhexylacrylat 10 g n-Butylacrylat verwendet wurden.

Die so erhaltene Kompositpartikeldispersion wies einen Feststoffgehalt von 11,4 Gew.-%, bezogen auf das Gesamtgewicht der wäßrigen Kompositpartikeldispersion, auf. Das Vorliegen von himbeerförmigen Kompositpartikeln mit einem Durchmesser von etwa 220 nm wurde mittels transmissionselektronenmikroskopischer Untersuchungen nachgewiesen. Freie Siliziumdioxidteilchen ließen sich praktisch nicht nachweisen.

### 11. Beispiel

In einem 500 ml Vierhalskolben wurden unter Stickstoffatmosphäre bei 20°C und 1 bar (absolut) 40 g entionisiertes und sauerstofffreies Wasser sowie 1,5 g 1 M Salzsäure vorgelegt und unter Rühren (250 Umdrehungen pro Minute) 40 g Nyacol® 2040 zugegeben. Anschließend stellte man die wäßrige Phase mit 3,99 g 1 M Salzsäure auf einen pH-Wert von 2,5 ein und füllte sie mit entionisiertem und sauerstofffreiem Wasser, das mit 1 M Salzsäure auf einen pH-Wert von 2,5 eingestellt worden war, auf 100 g auf. Danach heizte man das Reaktionsgemisch auf eine Reaktionstemperatur von 85°C auf. Der pH-Wert dieser wäßrigen Phase, gemessen bei Raumtemperatur, betrug 2,5.

Parallel stellte man eine wäßrige Emulsion, bestehend aus 20 g Styrol, 20 g n-Butylacrylat, 60 g entionisiertem und sauerstofffreiem Wasser, 2 g einer 20 gew.-%igen wäßrigen Lösung des nichtionischen Emulgators Lutensol® AT18 sowie 0,1 g 4-Vinylpyridin her (Zulauf 1). Eine Initiatorlösung wurde aus 0,9 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 22,9 Gew.-%, bezogen auf das Gesamtgewicht der wäßrigen Kompositpartikeldispersion, auf. Das Vorliegen von himbeerförmigen Kompositpartikeln mit einem Durchmesser von etwa 120 bis 300 nm wurde mittels transmissionselektronenmikroskopischer Untersuchungen nachgewiesen. Freie Siliziumdioxidteilchen ließen sich praktisch nicht nachweisen.

### 12. Beispiel

In einem 500 ml Vierhalskolben wurden unter Stickstoffatmosphäre bei 20°C und 1 bar (absolut) 15 g entionisiertes und sauerstofffreies Wasser sowie 1,5 g 1 M Salzsäure vorgelegt und unter Rühren (250 Umdrehungen pro Minute) 73,5 g Nyacol® 2040 zugegeben. Anschließend stellte man die wäßrige Phase mit 8,24 g 1 M Salzsäure auf einen pH-Wert von 2,5 ein und füllte sie mit entionisiertem und sauerstofffreiem Wasser, das mit 1 M Salzsäure auf pH 2,5 eingestellt worden war, auf 100 g auf. Danach heizte man das Reaktionsgemisch auf eine Reaktionstemperatur von 85°C auf. Der pH-Wert dieser wäßrigen Phase, gemessen bei Raumtemperatur, betrug 2,5.

Parallel stellte man eine wäßrige Emulsion, bestehend aus 34,3 g Styrol, 34,3 g n-Butylacrylat, 31,4 g entionisiertem und sauerstofffreiem Wasser, 3,43 g einer 20 gew.-%igen wäßrigen Lösung des nichtionischen Emulgators Lutensol® AT18 sowie 0,1 g 4-Vinylpyridin her (Zulauf 1). Eine Initiatorlösung wurde aus 1,54 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 37,5 Gew.-%, bezogen auf das Gesamtgewicht der wäßrigen Kompositpartikeldispersion, auf. Das Vorliegen von himbeerförmigen Kompositpartikeln mit einem Durchmesser von etwa 120 bis 240 nm wurde mittels transmissionselektronenmikroskopischer Untersuchungen nachgewiesen. Freie Siliziumdioxidteilchen ließen sich praktisch nicht nachweisen.

### 13. Beispiel

In einem 500 ml Vierhalskolben wurden unter Stickstoffatmosphäre bei 20°C und 1 bar (absolut) 50 g entionisiertes und sauerstofffreies Wasser sowie 1,5 g 1 M Salzsäure vorgelegt und unter Rühren (250 Umdrehungen pro Minute) 26,7 g Nyacol® 830 (mit einem Siliziumdioxidfeststoffgehalt von 30 Gew.-%) zugegeben. Anschließend stellte man die wäßrige Phase mit 4,06 g 1 M Salzsäure auf einen pH-Wert von 2,5 ein und füllte sie mit entionisiertem und sauerstofffreiem Wasser, das mit 1 M Salzsäure auf einen pH-Wert von 2,5 eingestellt worden war, auf 100 g auf. Anschließend heizte man das Reaktionsgemisch auf eine Reaktionstemperatur von 85 °C auf. Der pH-Wert dieser wäßrigen Phase, gemessen bei Raumtemperatur, betrug 2,5.

Parallel stellte man eine wäßrige Emulsion, bestehend aus 20 g Styrol, 80 g entionisiertem und sauerstofffreiem Wasser, 2 g einer 20 gew.-%igen wäßrigen Lösung des nichtionischen Emulgators Lutensol® AT18 sowie 0,2 g Norsocryl® MADAME her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 12,0 Gew.-%, bezogen auf das Gesamtgewicht der wäßrigen Kompositpartikeldispersion, auf. Das Vorliegen von himbeerförmigen Kompositpartikeln mit einem Durchmesser von etwa 160 bis 200 nm wurde mittels transmissionselektronenmikroskopischer Untersuchungen nachgewiesen. Freie Siliziumdioxidteilchen ließen sich praktisch nicht nachweisen.

Die Siliziumdioxidteilchen von Nyacol® 830 wiesen bei einem pH-Wert von 2,5 eine elektrophoretische Mobilität mit negativem Vorzeichen auf.

### 14. Beispiel

In einem 500 ml Vierhalskolben wurden unter Stickstoffatmosphäre bei 20°C und 1 bar (absolut) 50 g entionisiertes und sauerstofffreies Wasser sowie 1,5 g 1 M Salzsäure vorgelegt und unter Rühren (250 Umdrehungen pro Minute) 26,7 g Ludox® HS30 (mit einem Siliziumdioxidfeststoffgehalt von 30 Gew.-%) zugegeben. Anschließend stellte man die wäßrige Phase mit 1,88 g 1 M Salzsäure auf einen pH-Wert von 2,5 ein und füllte sie mit entionisiertem und sauerstofffreiem Wasser, das mit 1 M Salzsäure auf einen pH-Wert von 2,5 eingestellt worden war, auf 100 g auf. Anschließend heizte man das Reaktionsgemisch auf eine Reaktionstemperatur von 85°C auf. Der pH-Wert dieser wäßrigen Phase, gemessen bei Raumtemperatur, betrug 2,5.

Parallel stellte man eine wäßrige Emulsion, bestehend aus 10 g Styrol, 10 g n-Butylacrylat, 80 g entionisiertem und sauerstofffreiem Wasser, 1 g einer 20 gew.-%igen wäßrigen Lösung des nichtionischen Emulgators Lutensol® AT18 sowie 0,05 g 4-Vinylpyridin her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 9,7 Gew.-%, bezogen auf das Gesamtgewicht der wäßrigen Kompositpartikeldispersion, auf. Das Vorliegen von himbeerförmigen Kompositpartikeln mit einem Durchmesser von etwa 200 nm wurde mittels transmissionselektronenmikroskopischer Untersuchungen nachgewiesen. Freie Siliziumdioxidteilchen ließen sich praktisch nicht nachweisen.

Die Siliziumdioxidteilchen von Ludox® HS30 wiesen bei einem pH-Wert von 2,5 eine elektrophoretische Mobilität mit negativem Vorzeichen auf.

### 15. Beispiel

In einem 500 ml Vierhalskolben wurden unter Stickstoffatmosphäre bei 20°C und 1 bar (absolut) 60 g entionisiertes und sauerstofffreies Wasser sowie 0,01 g 1 M Salzsäure vorgelegt und unter Rühren (250 Umdrehungen pro Minute) 40 g Nyacol® CEO2 {ACT} (mit einem Cer-(IV)-oxidfeststoffgehalt von 20 Gew.-%) zugegeben. Anschließend heizte man auf eine Reaktionstemperatur von 85°C auf. Der pH-Wert dieser wäßrigen Phase, gemessen bei Raumtemperatur, betrug 3.

Parallel stellte man eine wäßrige Emulsion, bestehend aus 20 g Styrol, 80 g entionisiertem und sauerstofffreiem Wasser, 1 g einer 20 gew.-%igen wäßrigen Lösung des nichtionischen Emulgators Lutensol® AT18 sowie 0,2 g des Natriumsalzes der 4-Styrolsulfonsäure her (Zulauf 1). Eine Initiatorlösung wurde aus 0,45 g AIBA und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Einen Feststoffgehalt von 11,2 Gew.-%, bezogen auf das Gesamtgewicht der wäßrigen Kompositpartikeldispersion, wies die so zugängliche Kompositpartikeldispersion auf. Durch transmissionselektronenmikroskopische Messungen wurden himbeerförmige Kompositpartikel mit einem Durchmesser von etwa 200 bis 400 nm nachgewiesen. Freie Cer-(IV)-oxidteilchen konnten praktisch nicht nachgewiesen werden.

Die Cer-(IV)-oxidteilchen von Nyacol® CEO2 {ACT} wiesen bei einem pH-Wert von 3 eine elektrophoretische Mobilität mit positivem Vorzeichen auf.

Durch Zentrifugieren der Kompositpartikeldispersion (3000 Umdrehungen pro Minute, Dauer 20 Minuten) wurde vollständige Sedimentation der dispergierten Partikel erzielt.

### 5. Vergleichsbeispiel

Beispiel 15 wurde wiederholt mit der Ausnahme, daß bei der Herstellung von Zulauf 1 anstelle von 0,2 g des Natriumsalzes der 4-Styrolsulfonsäure 0,25 g Norsocryl® ADAMQUAT MC 80 eingesetzt wurde.

Die gebildete Partikeldispersion wies einen Feststoffgehalt von 11,4 Gew.-%, bezogen auf das Gesamtgewicht der wäßrigen Partikeldispersion, auf. Das erhaltene trübe Reaktionsgemisch wurde mittels transmissionselektronenmikroskopische Messungen untersucht. Himbeerförmige Kompositpartikel waren nicht nachweisbar.

Durch Zentrifugieren der trüben Dispersion (3000 Umdrehungen pro Minute, Dauer 20 Minuten) konnte keine Sedimentation der dispergierten Partikel erreicht werden.

### 16. Beispiel

In einem 500 ml Vierhalskolben wurden unter Stickstoffatmosphäre bei 20°C und 1 bar (absolut) 42,9 g entionisiertes und sauerstofffreies Wasser vorgelegt und unter Rühren (250 Umdrehungen pro Minute) 57,1 g Nyacol® YTTRIA (mit einem Yttrium-(III)-oxidfeststoffgehalt von 14 Gew.-%) zugegeben. Anschließend heizte man das Reaktionsgemisch auf eine Reaktionstemperatur von 85°C auf. Der pH-Wert dieser wäßrigen Phase, gemessen bei Raumtemperatur, betrug 7,2.

Parallel stellte man eine wäßrige Emulsion, bestehend aus 20 g Styrol, 80 g entionisiertem und sauerstofffreiem Wasser, 1 g einer 20 gew.-%igen wäßrigen Lösung des nichtionischen Emulgators Lutensol® AT18 sowie 0,2 g Methylacrylsäure her (Zulauf 1). Eine Initiatorlösung wurde aus 0,45 g AIBA und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 13,7 Gew.-%, bezogen auf das Gesamtgewicht der wäßrigen Kompositpartikeldispersion, auf. Durch transmissionselektronenmikroskopische Messungen wurden himbeerförmige Kompositpartikel mit einem Durchmesser von etwa 90 nm nachgewiesen. Freie Yttrium-(III)-oxidteilchen konnten praktisch nicht nachgewiesen werden.

Die Yttrium-(III)-oxidteilchen von Nyacol® YTTRIA wiesen bei einem pH-Wert von 7,2 eine elektrophoretische Mobilität mit positivem Vorzeichen auf.

## Patentansprüche

1. Verfahren zur Herstellung einer wäßrigen Dispersion von aus Polymerisat und feinteiligem anorganischen Feststoff aufgebauten Partikeln (Kompositpartikel), bei dem ein Gemisch aus ethylenisch ungesättigten Monomeren in wäßrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wäßrigen Emulsionspolymerisation polymerisiert wird, **dadurch gekennzeichnet, daß**
a) eine stabile wäßrige Dispersion des wenigstens einen anorganischen Feststoffs eingesetzt wird, welche dadurch charakterisiert ist, daß sie bei einer Anfangsfeststoffkonzentration von ≥ 1 Gew.-%, bezogen auf die wäßrige Dispersion des wenigstens einen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wäßrigen Standardkaliumchlorid-Lösung bei einem pH-Wert, der dem pH-Wert des wäßrigen Reaktionsmediums am Beginn der Emulsionspolymerisation entspricht, eine von Null verschiedene elektrophoretische Mobilität zeigen
und
c) das Gemisch aus ethylenisch ungesättigten Monomeren > 0 und ≤ 4 Gew.-%, bezogen auf seine Gesamtmenge, wenigstens ein ethylenisch ungesättigtes Monomer A enthält, das entweder
- wenigstens eine Säuregruppe und/oder deren entsprechendes Anion enthält, wenn die dispergierten Feststoffteilchen des wenigstens einen anorganischen Feststoffs unter den vorgenannten Bedingungen eine elektrophoretische Mobilität mit positivem Vorzeichen aufweisen,
oder
- wenigstens eine Amino-, Amido-, Ureido- oder N-heterocyclische Gruppe und/oder deren am Stickstoff protonierten oder alkylierten Ammoniumderivate enthält, wenn die dispergierten Feststoffteilchen des wenigstens einen anorganischen Feststoffs unter den vorgenannten Bedingungen eine elektrophoretische Mobilität mit negativem Vorzeichen aufweisen.

2. Verfahren nach Anspruch 1, **dadurch gekennzeichnet, daß** der wenigstens eine anorganische Feststoff ausgewählt ist aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid.

3. Verfahren nach einem der Ansprüche 1 oder 2, **dadurch gekennzeichnet, daß** der wenigstens eine anorganische Feststoff in Wasser bei 20°C und 1 bar (absolut) eine Löslichkeit ≤ 1 g/l Wasser aufweist.

4. Verfahren nach einem der Ansprüche 1 bis 3, **dadurch gekennzeichnet, daß** das wenigstens eine Dispergiermittel ein Emulgator ist.

5. Verfahren nach einem der Ansprüche 1 bis 4, **dadurch gekennzeichnet, daß** das wenigstens eine Monomer A wenigstens eine Säuregruppe und/oder deren entsprechendes Anion enthält, welche aus der Gruppe umfassend die Carbonsäure-, Sulfonsäure-, Schwefelsäure-, Phosphorsäure- und Phosphonsäuregruppe ausgewählt ist.

6. Verfahren nach einem der Ansprüche 1 bis 5, **dadurch gekennzeichnet, daß** das wenigstens eine Monomer A ausgewählt ist aus der Gruppe umfassend Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure.

7. Verfahren nach einem der Ansprüche 1 bis 4, **dadurch gekennzeichnet, daß** das wenigstens eine Monomer A ausgewählt ist aus der Gruppe umfassend 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat sowie 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium)ethylmethacrylatchlorid.

8. verfahren nach einem der Ansprüche 1 bis 6, **dadurch gekennzeichnet, daß** der wenigstens eine radikalische Polymerisationsinitiator 2,2'-Azobis(amidinopropyl)dihydrochlorid ist.

9. verfahren nach Anspruch 7, **dadurch gekennzeichnet, daß** der wenigstens eine radikalische Polymerisationsinitiator aus der Gruppe umfassend Natriumperoxodisulfat, Kaliumperoxodisulfat, Ammoniumperoxodisulfat ausgewählt ist.

10. Wässrige Dispersion von Kompositpartikeln, erhältlich nach einem Verfahren gemäß einem der Ansprüche 1 bis 9.

11. Wässrige Dispersion nach Anspruch 10, **dadurch gekennzeichnet, daß** ≥ 50 Gew.-% der feinteiligen Feststoffteilchen, bezogen auf die Gesamtmenge der in den Kompositpartikeln enthaltenen feinteiligen Feststoffteilchen, auf der Oberfläche der Polymermatrix gebunden sind.

12. Verwendung einer wäßrigen Dispersion von Kompositpartikeln gemäß Anspruch 10 oder 11, als Klebstoff, als Bindemittel, zur Herstellung einer Schutzschicht, zur Modifizierung von Zement- und Mörtelformulierungen oder in der medizinischen Diagnostik.

13. Kompositpartikelpulver, erhältlich durch Trocknung einer wäßrigen Dispersion von Kompositpartikeln gemäß Anspruch 10 oder 11.

## Claims

1. A process for preparing an aqueous dispersion of particles composed of addition polymer and finely divided inorganic solid (composite particles), in which process a mixture of ethylenically unsaturated monomers is dispersely distributed in aqueous medium and is polymerized by the method of free-radical aqueous emulsion polymerization by means of at least one free-radical polymerization initiator in the presence of at least one dispersely distributed, finely divided inorganic solid and at least one dispersant, wherein
a) a stable aqueous dispersion of said at least one inorganic solid is used, said dispersion having the characteristic features that at an initial solids concentration of ≥ 1% by weight, based on the aqueous dispersion of said at least one solid, it still contains in dispersed form one hour after its preparation more than 90% by weight of the originally dispersed solid and its dispersed solid particles have a weight-average diameter s 100 nm,
b) the dispersed particles of said at least one inorganic solid exhibit a nonzero electrophoretic mobility in an aqueous standard potassium chloride solution at a pH which corresponds to the pH of the aqueous reaction medium at the beginning of the emulsion polymerization,
and
c) the mixture of ethylenically unsaturated monomers contains > 0 and ≤ 4% by weight, based on its overall amount, of at least one ethylenically unsaturated monomer A, which comprises either
- at least one acid group and/or its corresponding anion, if the dispersed particles of said at least one inorganic solid have an electrophoretic mobility with a positive sign under the abovementioned conditions,
or
- at least one amino, amido, ureido or N-heterocyclic group and/or its ammonium derivatives alkylated or protonated on the nitrogen, if the dispersed particles of said at least one inorganic solid have an electrophoretic mobility with a negative sign under the abovementioned conditions.

2. A process as claimed in claim 1, wherein said at least one inorganic solid is selected from the group consisting of silicon dioxide, aluminum oxide, tin(IV) oxide, yttrium(III) oxide, cerium(IV) oxide, hydroxyaluminum oxide, calcium carbonate, magnesium carbonate, calcium orthophosphate, magnesium orthophosphate, calcium metaphosphate, magnesium metaphosphate, calcium pyrophosphate, magnesium pyrophosphate, iron(II) oxide, iron(III) oxide, iron(II/III) oxide, titanium dioxide, hydroxyapatite, zinc oxide, and zinc sulfide.

3. A process as claimed in either of claims 1 and 2, wherein said at least one inorganic solid in water at 20°C and 1 bar (absolute) has a solubility ≤ 1 g/l water.

4. A process as claimed in any of claims 1 to 3, wherein said at least one dispersant is an emulsifier.

5. A process as claimed in any of claims 1 to 4, wherein said at least one monomer A comprises at least one acid group and/or its corresponding anion which is selected from the group consisting of the carboxylic acid, sulfonic acid, sulfuric acid, phosphoric acid and phosphonic acid groups.

6. A process as claimed in any of claims 1 to 5, wherein said at least one monomer A is selected from the group consisting of acrylic acid, methacrylic acid, maleic acid, fumaric acid, itaconic acid, crotonic acid, 4-styrenesulfonic acid, 2-methacryloxyethylsulfonic acid, vinylsulfonic acid and vinylphosphonic acid.

7. A process as claimed in any of claims 1 to 4, wherein said at least one monomer A is selected from the group consisting of 2-vinylpyridine, 4-vinylpyridine, 2-vinylimidazole, 2-(N,N-dimethylamino)ethyl acrylate, 2-(N,N-dimethylamino)ethyl methacrylate, 2-(N,N-diethylamino)ethyl acrylate, 2-(N,N-diethylamino)ethyl methacrylate, 2-(N-tert-butylamino)ethyl methacrylate, N-(3-N',N'-dimethylaminopropyl)methacrylamide and 2-(1-imidazolin-2-onyl)ethyl methacrylate and also 2-(N,N,N-trimethylammonium)ethyl acrylate chloride, 2-(N,N,N-trimethylammonium)ethyl methacrylate chloride, 2-(N-benzyl-N,N-dimethylammonium)ethyl acrylate chloride and 2-(N-benzyl-N,N-dimethylammonium)ethyl methacrylate chloride.

8. A process as claimed in any of claims 1 to 6, wherein said at least one free-radical polymerization initiator is 2,2'-azobis(amidinopropyl) dihydrochloride.

9. A process as claimed in claim 7, wherein said at least one free-radical polymerization initiator is selected from the group consisting of sodium peroxodisulfate, potassium peroxodisulfate, and ammonium peroxodisulfate.

10. An aqueous dispersion of composite particles obtainable by a process as claimed in any of claims 1 to 9.

11. An aqueous dispersion as claimed in claim 10, wherein ≥ 50% by weight of the finely divided solid particles, based on the overall amount of finely divided solid particles present in the composite particles, are bound on the surface of the polymer matrix.

12. The use of an aqueous dispersion of composite particles, as claimed in claim 10 or 11, as an adhesive, as a binder, for producing a protective coat, for modifying cement formulations and mortar formulations, or in medical diagnostics.

13. A composite-particle powder obtainable by drying an aqueous dispersion of composite particles, as claimed in claim 10 or 11.

## Revendications

1. Procédé de préparation d'une dispersion aqueuse de particules constituées de polymère et d'un solide inorganique à fines particules (particules composites), dans lequel un mélange de monomères éthyléniquement insaturés est distribué de manière dispersée dans un milieu aqueux et est polymérisé au moyen d'au moins un initiateur de polymérisation radicalaire, en présence. d'au moins un solide inorganique à fines particules distribué de manière dispersée et d'au moins un agent de dispersion, par la méthode de polymérisation radicalaire en émulsion aqueuse, **caractérisé en ce que**
a) on met en oeuvre une dispersion stable du au moins un solide inorganique, qui est **caractérisée en ce que**, pour une concentration de départ de substance solide ≥ 1 % en poids, par rapport à la dispersion aqueuse du au moins un solide, elle contient encore, une heure après sa préparation, plus de 90% en poids du solide dispersé à l'origine sous forme dispersée, et que ses particules de solide dispersées présentent une moyenne pondérale de diamètre ≤ 100 nm,
b) les particules dispersées de substance solide du au moins un solide inorganique présentent, dans une solution aqueuse standard de chlorure de potassium, et à un pH correspondant au pH du milieu réactionnel aqueux au début de la polymérisation en émulsion, une mobilité électrophorétique différente de zéro
et
c) le mélange de monomères éthyléniquement insaturés contient > 0 et ≤ 4% en poids, par rapport à sa quantité totale, d'au moins un monomère A éthyléniquement insaturé, qui, soit
- soit contient un groupe acide et/ou son anion correspondant, lorsque les particules solides dispersées du au moins un solide inorganique présentent, dans les conditions précitées, une mobilité électrophorétique de signe positif,
soit
- contient au moins un groupe amino, amido, uréido ou N-hétérocyclique et/ou leurs dérivés d'ammonium protonés ou alkylés sur l'azote, lorsque les particules solides dispersées du au moins un solide inorganique présentent, dans les conditions précitées, une mobilité électrophorétique de signe négatif.

2. Procédé selon la revendication 1, **caractérisé en ce que** le au moins un solide inorganique est choisi dans le groupe comprenant le dioxyde de silicium, l'oxyde d'aluminium, l'oxyde d'étain (IV), l'oxyde d'yttrium(III), l'oxyde de cérium(IV), l'hydroxyde d'aluminium,, le carbonate de calcium, le carbonate de magnésium, l'orthophosphate de calcium, l'orthophosphate de magnésium, le métaphosphate de calcium, le métaphosphate de magnésium, le pyrophosphate de calcium, le pyrophosphate de magnésium, l'oxyde de fer(II), l'oxyde de fer(III), l'oxyde de fer(II/III), le dioxyde de titane, l'hydroxylapatite, l'oxyde de zinc et le sulfure de zinc.

3. Procédé selon l'une quelconque des revendications 1 ou 2, **caractérisé en ce que** le au moins un solide inorganique présente, dans de l'eau à 20°C et sous 1 bar (absolu), une solubilité ≤ 1 g/l d'eau.

4. Procédé selon l'une quelconque des revendications 1 à 3, **caractérisé en ce que** le au moins un agent de dispersion est un émulsifiant.

5. Procédé selon l'une quelconque des revendications 1 à 4, **caractérisé en ce que** le au moins un monomère A contient au moins un groupe acide et/ou son anion correspondant, lequel est choisi dans le groupe formé par les radicaux d'acide carboxylique, d'acide sulfonique, d'acide sulfurique, d'acide phosphorique et d'acide phosphonique.

6. Procédé selon l'une quelconque des revendications 1 à 5, **caractérisé en ce que** le au moins un monomère A est choisi dans le groupe comprenant l'acide acrylique, l'acide méthacrylique, l'acide maléique, l'acide fumarique, l'acide itaconique, l'acide crotonique, l'acide 4-styrène-sulfonique, l'acide 2-méthacryloxyéthylsulfonique, l'acide vinylsulfonique et l'acide vinylphosphonique.

7. Procédé selon l'une quelconque des revendications 1 à 4, **caractérisé en ce que** le au moins un monomère A est choisi dans le groupe comprenant la 2-vinylpyridine, la 4-vinylpyridine, le 2-vinylimidazole, l'acrylate de 2-(N,N-diméthylamino)éthyle, le méthacrylate de 2-(N,N-diméthylamino)éthyle, l'acrylate de 2-(N,N-diéthylamino)éthyle, le méthacrylate de 2-(N,N-diéthylamino)éthyle, le méthacrylate de 2-(N-tert.-butylamino)éthyle, le N-(3-N',N'-diméthylaminopropyl)méthacrylamide et le méthacrylate de 2-(1-imidazolin-2-onyl)éthyle ainsi que le chlorure de 2-(N,N,N-triméthylammonium)-éthylacrylate, le chlorure de 2-(N,N,N-triméthylammonium)-éthylméthacrylate, le chlorure de 2- (N-benzyl-N, N-diméthylammonium)-éthylacrylate et le chlorure de 2-(N-benzyl-N,N-diméthylammonium)-éthylméthacrylate..

8. Procédé selon l'une quelconque des revendications 1 à 6, **caractérisé en ce que** le au moins un initiateur de polymérisation radicalaire est du dichlorhydrate de 2,2'-azobis(amidinopropyle).

9. Procédé selon la revendication 7, **caractérisé en ce que** le au moins un initiateur de polymérisation radicalaire est choisi dans le groupe comprenant le peroxodisulfate de sodium, le peroxodisulfate de potassium, le peroxodisulfate d'ammonium.

10. Dispersion aqueuse de particules composites, que l'on peut obtenir par un procédé selon l'une quelconque des revendications 1 à 9.

11. Dispersion aqueuse selon la revendication 10, **caractérisée en ce que** ≥ 50% en poids des particules du solide finement divisé, par rapport à la quantité totale des particules du solide finement divisé contenu dans les particules composites, sont liés à la surface de la matrice polymère.

12. Utilisation d'une dispersion aqueuses de particules composites selon la revendication 10 ou 11 comme adhésif, comme liant, pour la préparation d'une couche de protection, pour la modification de formulations de mortier ou de ciment ou en diagnostic médical.

13. Poudre de particules composites que l'on peut obtenir par séchage d'une dispersion aqueuse de particules composites selon la revendication 10 ou 11.
